# EUROPEAN PATENT SPECIFICATION

(11) **EP 3 086 300 B1**
(45) Date of publication and mention of the grant of the patent: **15.04.2020**
(21) Application number: 15164561.1
(22) Date of filing: 21.04.2015
(51) Int. Cl.: G08B 17/12

(54) **THERMAL IMAGING SYSTEM AND METHOD FOR CREATING A THERMAL IMAGE**
WÄRMEBILDSYSTEM UND VERFAHREN ZUR ERZEUGUNG EINES WÄRMEBILDES
SYSTÈME ET PROCÉDÉ D'IMAGERIE THERMIQUE PERMETTANT DE CRÉER UNE IMAGE THERMIQUE

(43) Date of publication of application: 26.10.2016
(73) Proprietor: M-u-t AG Messgeräte für Medizin- und Umwelttechnik, 22880 Wedel (DE)
(72) Inventor: OLDORF, Carsten, 25469 Halstenbek (DE); HAGEDORN, Werner, 25485 Hemdingen (DE); DUNKELMANN, Swen, 20535 Hamburg (DE)
(74) Representative: Bird & Bird LLP

(56) References cited:
- JP-A- H11 345 379
- JP-A- 2003 091 786
- US-A- 5 225 810
- US-A1- 2010 117 839
- US-A1- 2012 314 066

## Description

The present invention relates to a thermal imaging system comprising a housing, a thermal imaging sensor and a mounting means. The thermal imaging sensor is arranged in the housing and adapted to capture a two-dimensional thermal image in the infrared spectral range. The captured two-dimensional thermal image comprises a plurality of pixels, wherein each pixel represents a surface section located in a field of view of the thermal imaging sensor, wherein surface temperature information of which surface section is assigned to the respective pixel as temperature value by the thermal imaging sensor. The mounting means is adapted for mounting the housing to a support structure and for controllably moving the housing with respect to a support structure to which the housing is mounted in two rotational degrees of freedom to different positions. The invention further relates to a method for creating a thermal image.

Thermal imaging systems based on infrared radiation are widely used, for example, in bulk storage or waste recovery facilities to monitor the temperature of stored goods so that a fire can be detected and extinguished before it spreads over the entire storage. Current thermal imaging systems commonly trigger an alarm when a surface temperature monitored by the imaging system exceeds a predetermined temperature threshold. If the temperature threshold is set at a sufficiently low temperature, it may even be possible to remove the goods that are at danger of igniting or to cool them, for example, using water or foam before the actual fire ignites.

In particular, in storage facilities used for storing goods that easily ignite, firefighting monitors are often permanently installed. These firefighting monitors are remote-controlled and can be used to directly attack an upcoming or already burning fire without having to wait for the arrival of firefighting equipment and personal. The success of the firefighting monitors largely depends on the experience of the operator controlling the firefighting monitor as the firefighting monitor has to be oriented such that the extinguishing agent, for example, water or foam, ejected by the monitor hits the area detected by the thermal imaging system. This is particularly difficult as the operator commonly only sees the storage facility on a screen which makes it difficult if not impossible to estimate distances correctly. If areas are hit that are not at risk of incinerating, extinguishing agent may be wasted.

The latter is not only critical as insufficient extinguishing agent may be available to prevent or extinguish the fire. It may also be problematic that parts of the goods which were not at risk of burning are contaminated by the extinguishing agent. If the goods at question are, for example, fuel for a power plant such as coal, the extinguishing agent may reduce the fuel value of the fuel or even render the fuel completely useless. In other scenarios water used as extinguishing agent is contaminated by the goods onto which it is ejected. The water then has to be collected in tanks and often has to be disposed afterwards. Not only the disposal of the extinguishing agent is cost extensive, also the provision of tanks for collecting the extinguishing agent increases the construction and maintenance costs of storage facilities.

Another problem with remote-controlled firefighting monitors is the delay between the detection of a potential fire by a thermal imaging system and the reaction of the personnel operating the firefighting monitors, i.e. the reaction time. The reaction time could be reduced by providing automatic firefighting monitors which commence firefighting operations as soon as a potential origin of the fire has been detected by a thermal imaging system. However, for automatic firefighting monitors the information available from current thermal imaging systems is insufficient as they do not provide enough information to determine the exact position into which the firefighting monitor has to be directed.

JP2003091786 and JPH11345379 disclose thermal imaging systems comprising a housing, a thermal imaging sensor and a mounting means, wherein the thermal imaging sensor is arranged in the housing and adapted to capture a two-dimensional thermal image in the infrared spectral range.

It is, therefore, an object of the present invention to provide a thermal imaging system and a method for creating a thermal image which allow for an improved control of firefighting monitors so that a developing or already burning fire can be precisely attacked and which preferably allows using automatically operating firefighting monitors.

In a first aspect the problem is solved by a thermal imaging system according to claim 1 which comprises a distance meter arranged in or attached to the housing and adapted for determining the distance to at least one spot on a surface located in the field of view of the thermal imaging sensor. The system is adapted to assign a distance determined by the distance meter for the at least one spot to one or a plurality of pixels of the thermal image captured by the thermal imaging sensor, which pixel or plurality of pixels represent a surface section or a plurality of surface sections overlapping with the at least one spot.

The thermal imaging system according to the present invention comprises a thermal imaging sensor which captures images in the infrared spectral range. Due to atmospheric transmission limitations of infrared radiation it is preferred if the thermal imaging sensor operates in the spectral ranges of 3 µm to 5 µm and/or 7.5 µm to 14 µm. In these spectral ranges absorption by water vapor is low and scattering and absorption due to small particles such as smoke and dust is also low. Thermal imaging sensors sensitive to infrared radiation in the spectral range below 3 µm may also be used where higher temperatures have to be measured, e.g., in hot steel processing. However, lower temperatures are difficult to measure with such sensors. It is most preferred to use a thermal imaging sensor sensitive for long wavelength infrared radiation (LWIR), i.e. infrared radiation having a wavelength between 8.0 µm and 14.0 µm, as the atmospheric transmission is nearly constant over the entire spectral range for LWIR which makes it considerably easier and more reliable to predict temperatures using LWIR.

The image captured by the thermal imaging sensor is two-dimensional and divided into a plurality of pixels. Each of the pixels represents a surface section, i.e., a small surface segment, of a surface of an object in the fields of view of the thermal imaging sensor. The imaging sensor assigns a radiation intensity to each pixel, which radiation intensity can be correlated to a surface temperature or a value which is equivalent to a surface temperature. In this context, assigning surface temperature information to a pixel as a temperature value is understood to include assigning any kind of information representative of or correlated to a surface temperature to a pixel, i.e., a radiation intensity which can be correlated to a surface temperature is one example of surface temperature information. Thus, the image represents a two-dimensional surface temperature information distribution of the surfaces in the field of view of the thermal imaging sensor.

The thermal imaging sensor and further components of the thermal imaging system are arranged in a housing. For mounting the housing to a support structure, for example, the structure of a building or a dedicated pole or mast a mounting means or mounting arrangement is provided. The mounting means is additionally used to provide at least two rotational degrees of freedom to the housing and, therefore, also the thermal imaging sensor arranged in the housing. To this end, in the mounting means may, for example, comprise two controllable electro motors which can be used to move the housing in different positions. In the following the term position is understood with respect to the housing as the angles under which the housing and, thus, the thermal imaging sensor is arranged with respect to the two rotational degrees of freedom. The mounting means can, for example, provide a rotational movement about a vertical and a horizontal axis.

According to the present invention the thermal imaging system further comprises a distance meter which is also arranged in the housing or at least rigidly attached to the housing. The distance meter can, for example, be an optical sensor such as a laser sensor or a radar sensor. The distance meter can determine or measure the distance of at least one spot from the thermal imaging system, i.e., the distance measurement performed by the distance meter is a spot or point measurement. Such measurement is characterized by a very narrow field of view or aperture angle which allows for precise distance measurements up to distances of 100 m or more. The distance meter or sensor is arranged or oriented in the housing of the thermal imaging system such that the at least one spot whose distance from the system is determined with the distance meter is within the field of view of the thermal imaging sensor. In other words, the spot overlaps with one or more surface segments which are presented by pixels of the thermal image captured by the thermal imaging sensor. Depending on the distance of the spot from the system, the resolution of the imaging sensor and the width of the field of view of the distance meter, the lateral extension of the spot on the surface may be smaller than a surface section or incorporate several surface sections represented by a single pixel.

The thermal imaging system according to the present invention is adapted to assign the distance determined by the distance meter to those pixels that represent surface segments overlapping with the spot. However, the optical axis of the thermal imaging sensor and the distance meter will usually not be identical. Thus, even if the distance meter is permanently aligned with the thermal imaging sensor, the pixel or the pixels which represent surface segments overlapping with the spot of which the distance is determined by the distance meter change with the distance of the surface sections to the imaging system due to the parallax effect. Hence, the system according to the present invention is adapted to correct for this effect and to determine as a function of the distance measured by the distance meter the correct pixels presenting surface segments overlapping with the spot of the distance meter. Correction methods can be found by geometrical considerations known to the skilled person. Further, depending on the optical elements, e.g., lenses, arranged in the optical path of the imaging sensor, it may be necessary to correct the captured thermal images for optical aberrations such as distortion to make sure that a measured distance is assigned to the correct pixels. Algorithms used for correcting distortion and other optical aberrations in images captured in the visible spectral range are well known to the skilled person and can also be applied to images captured in the above-mentioned infrared spectral ranges.

Adapting the system according to the present invention such that it provides the claimed features can, for example, require that data processing means are provided. Data processing means could, for example, be used to assign measured distances to one or more pixels or performing image reconstruction. Such data processing means can, for example, be arranged in the housing of the system. They can, however, also be installed in a location remote from the housing, for example, in a room used by an operator of a facility in which the system is installed.

The present invention, thus, advantageously provides a system which can capture images providing surface temperature information of surfaces in the field of view of a temperature image sensor and allows supplementing at least some of the temperature information with information on the distance of the surfaces from thermal imaging system. The additional distance information can, for example, be provided to a firefighting monitor which can than automatically determine an optimum trajectory for an extinguishing agent ejected from the monitor. Such trajectory can be used to improve the accuracy of a remote-controlled firefighting monitor or other firefighting equipment reducing the amount of wasted extinguishing agent or even facilitate a fully autonomous firefighting monitor which does not require any kind of manual input.

In a preferred embodiment the system is adapted to control the mounting means to move the housing to a predetermined position. The system controls the thermal imaging sensor to capture a thermal image and the distance meter to determine a distance to at least one spot only after the housing has been moved to the predetermined position. Thus, the system according to the present invention preferably does not image and measure distances while the housing is under rotation but first moves to a predetermined position before capturing images with the thermal imaging sensor and measuring distances with the distance meter. This improves the image quality and also allows a precise determination of the field of view of the imaging sensor.

The system is preferably further adapted to identify a pixel or a plurality of pixels in a captured thermal image having assigned temperature values exceeding a threshold temperature value, i.e., a hotspot, and to determine a position to which the housing can be moved with respect to a support structure to which the housing has been mounted by the mounting means such that a distance to a spot overlapping with the surface section represented by the pixel or the surface sections represented by the plurality of pixels having assigned temperature values exceeding the temperature value threshold can be determined by the distance meter.

In other words, in the preferred embodiment the system evaluates temperature values of a previously captured thermal image. If some of the assigned temperature values exceed a predetermined temperature value threshold which usually depends on the imaged goods, the system does not or not only trigger an alarm as prior art thermal imaging system but calculates a new position to which the housing of the system may be rotated such that a distance to those surface elements having a surface temperature exceeding the temperature value threshold can be measured using the distance meter. The measured distance could then be provided, for example, to a firefighting monitor as supplemental information to improve the results of the firefighting operation. The preferred embodiment of the present invention, thus, advantageously provides means for determining the actual distance of surface elements having a surface temperature exceeding a temperature value threshold from the housing.

In a further preferred embodiment the distance meter is adapted to determine a distance to a plurality of spots on a surface in the field of view of the thermal imaging sensor without moving the housing with respect to a support structure to which the housing has been mounted. The system is adapted to assign each of the plurality of distances determined by the distance meter to one or a plurality of pixels of a thermal image captured by the thermal imaging sensor, which pixel or plurality of pixels represent a surface section or a plurality of surface sections overlapping with the respective spot of the plurality of spots. The distance meter can, for example, be a laser sensor not only providing measurements in a single spot but in a plurality of spots arranged along a line in the field of view of the thermal imaging sensor without having to move the housing of the imaging system. Thus, in a single position of the housing additional distance information can be obtained for the captured thermal image without having to move the housing.

The system according to the present invention is adapted to create a combined thermal image by controlling the mounting means to move the housing to each position of a first set of positions, controlling the thermal imaging sensor to capture a thermal image and controlling the distance meter to determine a distance to at least one spot in each position of the first set of positions, combining the plurality thermal images to a combined thermal image covering a field of view exceeding the field of view of a single thermal image captured with the thermal imaging sensor and assigning distances determined by the distance meter for the at least one spot in each position of the first set of positions to one or a plurality of pixels of the combined thermal image, which pixel or plurality of pixels represent a surface section or a plurality of surface sections overlapping with the at least one spot.

In other words, the system captures a series of thermal images in different positions of the housing using the thermal imaging sensor and combines these images using known image reconstruction techniques to a single image. Thus, the fields of view of individual images preferably overlap at least in some pixels with adjacent images. The combined thermal image also comprises sparse distance information of surface elements whose distance has been determined with the distance meter when capturing the individual images. A combined image can, for example, be presented to an operator of the system to provide an overview of an extended area of a storage facility without having to wait for individual images to be captured. If multiple images are combined to form a single combined image, it can be particularly important to correct the images for optical aberrations such as distortion caused by optical elements used for capturing the images. This ensures that the measured distances are assigned to the correct pixels.

The available sparse distance values for some of the pixels can, for example, be improved by interpolation between known values. Alternatively or additionally, the system is adapted in a preferred embodiment to update a previously created or updated combined thermal image by controlling the mounting means to move the housing to each position of a further set of positions, wherein the positions of the further set differ from positions of the first or a previous further set of positions used for creating or previously updating the combined thermal image, controlling the thermal imaging sensor to capture a thermal image and controlling the distance meter to determine a distance to at least one spot in each position of the further set of positions, replacing existing temperature values of pixels of the combined thermal image with temperature values of pixels of thermal images captured for positions of the further set of positions but maintaining a distance assigned to a pixel and assigning distances determined by the distance meter for the at least one spot in each position of the first set of positions to one or a plurality of pixels of the combined thermal image, which pixel or plurality of pixels represent a surface section or a plurality of surface sections overlapping with the at least one spot and wherein previously assigned distances are replaced by distances determined for positions of the further set of positions.

Thus, the system is adapted to update an already existing combined thermal image by capturing additional thermal images and measuring additional depths using a set of positions that deviates from previously used sets of positions. The combined field of view of the additionally captured images is chosen such that it essentially covers the same field of view as images captured using previous sets of positions. The surface temperature information obtained by an update thermal image is used to replace surface temperature values in the combined thermal image captured for the same surface segments or pixels. Thereby, it is possible to monitor changes in the surface temperature distribution of the goods under surveillance. Previous temperature values can be discarded when new values have been acquired.

As different positions are used in the further set of positions, the distance meter determines the depths of different spots and, therefore, surface section or pixels of the combined image than before. The distribution of bulk goods in storage facilities usually only changes on a longer time scale than the temperature of the goods if they are at risk of incinerating. Hence, previously determined distance values can be maintained if no new distances have been measured for the same pixels and the newly measured values are used to add missing distance or depth information such that after a combined image has been updated several times a detailed distance or depth map is available. After several further sets of positions have been used to update a combined image and the available distance measurements are sufficiently dense, it is possible to restart imaging by commencing again with the first set of positions and then repeat the further sets of positions.

Providing a combined image including dense depth information not only enables an improved overview of the goods under surveillance, it also facilitates firefighting operations. If surface segments are determined that have temperature exceeding a temperature threshold, a distance to these surface segments is preferably already available and can be provided to a firefighting monitor such that firefighting operations can commence without having to wait until the system has newly acquired a distance to the surface segments in question. Also precise fire fighting is supported in the event of sudden smoke appearance, where the distance meter may not be able to deliver valid measurements.

In an exemplary, preferred embodiment the combined image is created by a first set of position which positions have been chosen such that the images are captured in a plurality rows. When updating the combined image, the further set of position comprises the same number of positions as the first set of positions but each position being displaced with respect to a position of the first set by the same amount, i.e., the combined image is also updated by capturing rows of images but the rows are slightly displaced with respect to each preceding row. A following further set of positions again comprises positions which are displaced by a fixed amount with respect to a position of the previous further set.

In another preferred embodiment the distance meter operates in the visible or near infrared spectral range and the system is adapted to detect an indication of smoke emission by repeatedly determining a distance to a spot with the housing in the same position and by determining if a distance to the spot or a quality of the determined distance is reduced between repeated distance determinations, wherein determining a reduction of distance or of the quality of the determined distance is an indication of smoke emission. The system could use such information, for example, to raise a smoke alarm or, in particular, if a pixel or a plurality of pixels having an assigned surface temperature exceeding a threshold have already been detected by the thermal imaging system, as an indication to discard newly measured distances as they have been compromised by the smoke.

A distance meter operating in the visible or near infrared spectral range commonly uses light having a wavelength between 600 nm and 950 nm. Light in this wavelength is strongly scattered and reflected by smoke. If dense or compact smoke clouds are formed, the distance meter will determine an actual reduction in the determined distance. However, in most cases the signal of the distance meter will simply fade due to scattering and absorption of the laser light which reduces the quality of the measured distance. Commercially available distance meters have different ways of compensating or reporting a fading signal with a reduced quality to a user of the distance meter. Some distance meters will not directly report a reduced quality of the measured distance. Such distance meters may, for example, automatically repeat distance measurements multiple times and average the results to obtain a distance with a sufficiently high accuracy. However, this increases the time that is required for measuring the distance. The time between consecutive measurements can, therefore, be evaluated and used as a quality of the measured distance. Other commercially available distance meters evaluate the accuracy of the measured distance internally and provide a user directly with a quality factor or performance factor which can also be evaluated as a measure for the quality of the determined distance. Yet other distance meters will provide the actual accuracy of the determined distance, i.e., a measurement error. The accuracy of the determined distance also represents the quality of the determined distance and can, thus, be evaluated to determine if smoke is emitted.

Such detection of smoke emission could additionally be limited to cases where those surface segments overlapping with the spot whose distance is repeatedly measured or surface segments in the line of sight of the distance meter to the spot have an assigned temperature value exceeding a temperature threshold to avoid false indications of smoke if only the shape of the surface has changed.

It is, for example, also advantageous to provide an optical imaging sensor operating in the visible spectral range in the housing which optical imaging sensor has a field of view including the field of view of the thermal imaging sensor such that in addition to the thermal image an image showing structures visible to the human eye can be shown to an operator. The thermal image could, for example, be shown as an overlay on an image acquired in the visible spectral ranges. This improves the intelligibility of the images if they are presented to an operator of the system.

In a second aspect the problem is solved by a method for creating a thermal image as claimed in claim 6 by capturing a two-dimensional thermal image in the infrared spectral range using a thermal imaging sensor. The captured two-dimensional thermal image comprises a plurality of pixels, wherein each pixel represents a surface section located in the field of view of the thermal imaging sensor, surface temperature information of which surface section is assigned to the respective pixel as temperature value by the thermal imaging sensor. The method further comprises the steps of determining the distance to at least one spot on a surface located in a field of view of the thermal imaging sensor using a distance meter and assigning the distance determined by the distance meter for the at least one spot to one or a plurality of pixels of the thermal image captured by the thermal imaging sensor, which pixel or plurality of pixels represent a surface section or a plurality of surface sections overlapping with the at least one spot.

The embodiments of the method according to the present invention share the advantages of the respective embodiments of the system according to the present invention. Exemplary and preferred embodiments and their advantages described for the system according to the present invention in the preceding paragraphs apply vice versa to the embodiments of the method according to the present invention.

In a preferred embodiment a housing comprising the thermal imaging sensor and the distance meter is moved to a predetermined position by a rotational movement about at least one of two rotational degrees of freedom before the thermal image is captured and the distance to the at least one spot is determined.

The method further preferably comprises the steps of identifying a pixel or a plurality of pixels in a captured thermal image having assigned temperature values exceeding a temperature value threshold and determining a position to which the housing can be moved such that a distance to a spot overlapping with the surface section represented by the pixel or the surface sections represented by the plurality of pixels having assigned temperature values exceeding the temperature value threshold can be determined by the distance meter.

It is further preferred that the method comprises the steps of determining a distance to a plurality of spots on a surface in the field of view of the thermal imaging sensor without moving the housing and assigning each of the plurality of the determined distances to one or a plurality of pixels of a thermal image captured by the thermal imaging sensor, which pixel or plurality of pixels represent a surface section or a plurality of surface sections overlapping with the respective spot of the plurality of spots.

In another preferred embodiment the method further comprises the steps of moving the housing to each position of a first set of positions, capturing a thermal image and determining a distance to at least one spot in each position of the first set of positions, combining the plurality thermal images to a combined thermal image covering a field of view exceeding the field of view of a single thermal image captured with the thermal imaging sensor and assigning distances determined for the at least one spot in each position of the first set of positions to one or a plurality of pixels of the combined thermal image, which pixel or plurality of pixels represent a surface section or a plurality of surface sections overlapping with the at least one spot.

The method additionally comprises the steps of moving the housing to each position of a further set of positions, wherein the positions of the further set differ from positions of the first or a previous further set of positions, capturing a thermal image and determining a distance to at least one spot in each position of the further set of positions, replacing existing temperature values of pixels of the combined thermal image with temperature values of pixels of thermal images captured for positions of the further set of positions but maintaining a distance assigned to a pixel and assigning distances determined for the at least one spot in each position of the first set of positions to one or a plurality of pixels of the combined thermal image, which pixel or plurality of pixels represent a surface section or a plurality of surface sections overlapping with the at least one spot and wherein previously assigned distances are replaced by distances determined for positions of the further set of positions.

In another preferred embodiment of the method the distance meter operates in the visible or near infrared spectral range and the method further comprises the step of detecting an indication of smoke emission by repeatedly determining a distance to a spot with the housing in the same position and by determining if a distance to the spot is reduced between repeated distance determinations or if a quality of the determined distance is reduced between repeated distance determinations, wherein determining a reduction of distance or the quality of the distance determination is an indication of smoke emission.

An exemplary embodiment of a system and a method according to the present invention will be described in the following with reference to the Figures, wherein
- Fig. 1: shows an exemplary embodiment of a thermal imaging system according to the present invention,
- Fig. 2: shows an exemplary combined thermal image created with an exemplary embodiment of a thermal imaging system according to the present invention and
- Fig. 3: shows exemplary thermal images captured for creating and updating a combined thermal image with an exemplary embodiment of a thermal imaging system according to the present invention.

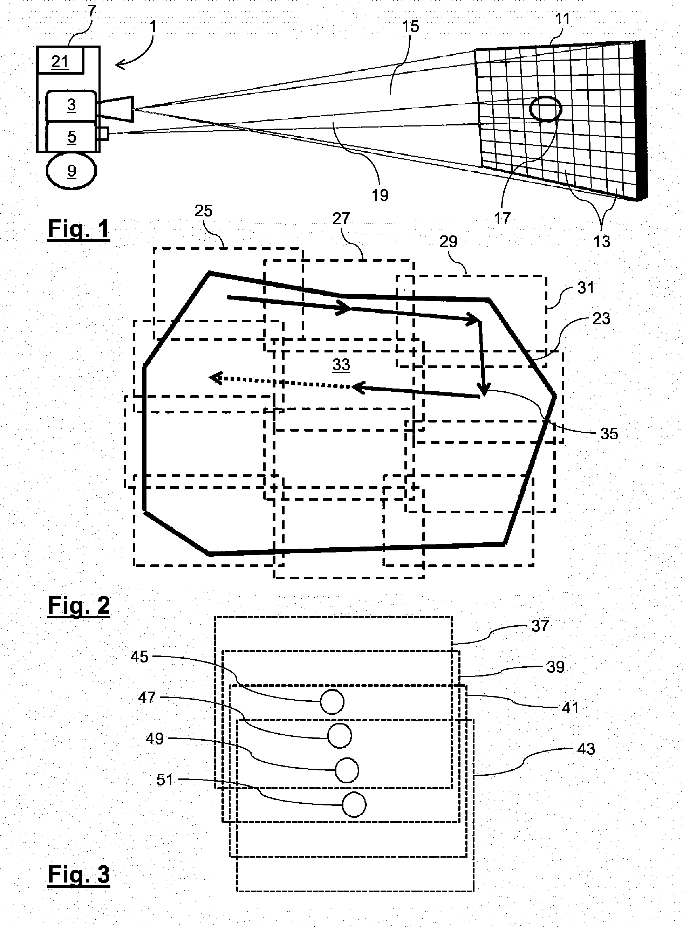

In Fig. 1 a thermal imaging system 1 comprising a thermal imaging sensor 3 and a distance meter 5 arranged in a common housing 7 is shown. The thermal imaging system 1 is adapted to carry out exemplary embodiments of the method according to the present invention. The housing 7 shown in Fig. 1 encloses both the imaging sensor 3 and the distance meter 5. The housing could, however, also comprise a plurality of parts, for example, one of the parts enclosing the thermal imaging sensor 3 and another part enclosing the distance meter 5. A mounting means 9 is provided which can be used to mount the housing 7 of the thermal imaging system 1 to a support structure (not shown) such as a building or a dedicated pole. In addition to mounting the thermal imaging system 1 to a support structure, the mounting means 9 is adapted for controllably moving the housing 7 including the elements of the system 1 arranged therein about two rotational degrees of freedom. The mounting means 9 can, for example, be adapted to rotate the housing 7 about a vertical and a horizontal axis. The movement of the housing 7 from one position to another by the mounting means 9 can be controlled, for example, by an operator or by an automated control program.

The thermal imaging sensor 3 operates in the long wave infrared (LWIR), i.e., it is adapted to receive and measure intensity of infrared radiation having a wavelength between 7 µm and 14 µm. It is adapted to capture two-dimensional thermal images 11. Each thermal image 11 comprises a plurality of pixels 13. In Fig. 1 only one of the pixels 13 is indicated by a reference numeral. Each of the pixels 13 represents a surface section located in a field of view 15 of the thermal imaging sensor 3. When capturing an image 11 the thermal imaging sensor 3 measures radiation intensity for each pixel 13 and assigns the measured radiation intensity as a temperature value to the respective pixels 13. The radiation intensity is correlated to the surface temperature of the surface section represented by the pixel 13 and, therefore, represents surface temperature information. In other words, surface temperature information in form of long wave infrared radiation intensity is mapped by the thermal imaging sensor 3 to each of the pixels 13 as a temperature value. The image 11 created by the thermal imaging sensor 3, thus, is a two-dimensional distribution of surface temperatures represented by radiation intensities. Further, the thermal imaging system 1 according to the present invention is adapted to correct a captured thermal image for optical aberrations such as distortion caused by lenses in the optical path of the thermal imaging sensor 3.

Also arranged in the housing 7 is the distance meter 5 which is an optical distance meter 5 operating in the visual or near infrared spectral range using a laser beam having a wavelength between 600 nm and 950 nm. The distance meter 5 is adapted for determining or measuring the distance to at least one spot 17 on a surface located in the field of view 15 of the thermal imaging sensor 3. The size of the spot 17 on the surface is defined by the field of view 19 of the distance meter 5. This field of view 19 is considerably narrower than the field of view 15 of the thermal imaging sensor 13 such that a more or less point-like distance measurement is possible up to a distance of approximately 200 m. The thermal imaging system 1 is adapted to assign a distance determined by the distance meter 5 to one or a plurality of pixels 13 that represent surface sections overlapping with the spot 17 of the distance meter 5. Depending on the field of view 15 of the distance meter 5, the spot 17 may correspond to a surface section covered by only one pixel 13 or, as shown in Fig. 1, several pixels 13 of the thermal image 11.

Please note that the surface sections overlapping with the spot 17 are not always identical. Due to the parallax effect the pixels 13 representing surface sections overlapping with the spot 17 differ. Which pixels 13 exactly represent those surface sections to which the distance is determined by the distance meter 5 can be determined by geometrical considerations as both the thermal imaging sensor 3 and the distance meter 5 are rigidly arranged in the housing 7. Even if the housing 7 is rotated by the mounting means 9, the relative orientation of the field of view 15 of the thermal imaging sensor 3 is always identical to the orientation of the field of view 19 of the distance meter 5.

In Fig. 1 the exemplary embodiment of a thermal imaging system 1 comprises a distance meter 5 adapted to measure only the distance to a single spot 17 without moving the housing 7. Alternatively, a distance meter 5 can be provided which includes optical or mechanical elements to shift the field of view 19 of the distance meter 5 without moving the housing 7 of the system 1 such that in each position distances to a plurality surface segments can be determined which do not overlap with a single spot 17.

The thermal imaging system 1 further comprises a data processing unit 21. In the data processing unit 21 software is provided which assigns the distances measured by the distance meter 5 to the correct pixels 13 of the image 11 captured by the thermal imaging sensor 3. Further, the thermal imaging system 1 comprises wireless and/or wired data transmission means not shown in the Figures which provide access to the functions of the thermal imaging system 1, for example, to an external control unit. Such an external control unit may also form part of the thermal imaging system 1. The data transmission means can, for example, be used to extract thermal images 11 including depth information from the thermal imaging system 1 such that the images 11 can be displayed to a system operator or evaluated for hotspots. In addition, the data transmission means can also be used to control the position of the thermal imaging system 1 and instruct the thermal imaging system 1 to perform specific measurements. Additionally or alternatively, the data transmission means can also be used to send or transmit data from the thermal imaging system 1 to external data processing units, for example, for reconstructing images 11 from data supplied by the thermal imaging sensor 3 or for assigning measured distances to the correct pixels 13.

The thermal imaging system 1 shown in Fig. 1 is adapted to control the mounting means 9 to move the housing 7 to a new position before an image 11 is captured by the thermal imaging sensor 3 and a distance is determined by the distance meter 5. In other words, the thermal imaging system 1 only captures images and measures distances when it is not moving. Thereby, images 11 of higher quality without movement artifacts can be captured at well known positions. This also facilitates assigning measured distances to the correct pixels 13.

If an image 11 captured by the thermal imaging sensor 13 comprises pixels 13 having assigned temperature values exceeding a temperature value threshold, the system 1 is adapted to determine which pixels 13 have the respective temperature values assigned. A method may then be carried out by the system 1 to determine a new position of the housing 7. The new position is determined such that the distance meter 5 can determine the distance to the surface segments represented by the pixels 13 having assigned temperature values exceeding the threshold once the system 1 has been rotated to the new position. The system is also adapted to instruct the mounting means 5 to actually move to the new position. Advantageously this allows to measure the distance to a hotspot discovered by the system 1. The measured distance and position information of the system 1 can then be provided via the data transmission means to firefighting equipment to improve or even automate firefighting.

The system 1 shown in Fig. 1 is also adapted to create a combined thermal image 23 as shown in Fig. 2. To this end the thermal imaging system 1 is adapted to control the mounting means 9 to move the housing 7 to different positions of a first set of positions. In Fig. 2 each of the positions of the first set of positions is represented by a thermal image 25, 27, 29, 31, 33 captured at one of the positions. Only five of the twelve thermal images 25 - 33 combined for generating the combined thermal image 23 have been labeled with reference numerals to keep the content of Fig. 2 transparent. The consecutive movement of the housing 7 from one position to another is indicated by the sequence of arrows 35. At each position the housing 7 is brought to a rest, an image 25 - 33 is captured with the thermal imaging sensor 3 and a distance is measured with the distance meter 5. Every time a thermal image 25 - 33 has been captured it is combined with already captured thermal images 25 - 33 to generate the combined thermal image 23. The combination of images 25 - 33 is performed using image reconstruction methods known to the skilled person.

The combined image 23 comprises sparse distance information for some pixels 13 only. In Fig. 2 no pixels are shown to maintain clarity of the Figure. The density of distance measurements can be increased if a generated thermal image 23 is updated according to the present invention. To this end the thermal imaging system 1 is adapted to control the housing 7 to move to each position of a further set of positions. The positions of the further set of positions are different from the positions of the first or one or more further sets of positions which have been used to generate or previously update the combined thermal image 23. At each position of the further set of positions a thermal image 11 is captured or acquired and a distance is measured with the distance meter 5. Temperature values assigned by the thermal imaging sensor 3 to pixels 13 of the newly acquired thermal image 11 are used to replace temperatures values assigned to pixels 13 of the combined thermal image 23, whenever pixels 13 of the newly acquired thermal image 11 and the combined thermal image 23 represent the same surface elements. The additional distances measured are also assigned to respective pixels 13 of the combined thermal image 23. As the positions of the further set of positions differs from positions previously used to update or generate the combined thermal image 23, the distance meter provides additional distances to surface elements for which no distance values or information is available in the combined thermal image 23. If the previously available distance values are maintained and only replaced, if the distance to the same surface segments is measured again, the sparse distance information of the originally captured combined thermal image will become denser with every update run using a further set of positions comprising different positions.

In Fig. 3 exemplary thermal images 37, 39, 41, 43 each representing one position of four consecutive further sets of positions are shown. Also shown in Fig. 3 are the spots 45, 47, 49, 51 of the distance meter 5 in each of the positions. In the first set of positions the housing 7 is moved to a first position in which a first thermal image 37 is captured and a distance to a surface segment overlapping with a first spot 45 is measured. In the second set of position the housing 7 is moved to a second position which differs from the first position of the first set by an offset. A second thermal image 39 is captured and a distance to surface segments overlapping with a second spot 47 is measured. The newly acquired temperature values can be used to update temperature values of a combined thermal image 23 created from thermal images 37 captured at positions of the first set. The distance measured in the second position is, however, not used to update distance values of the combined image but adds additional distance information to the combined image 23. If the same offset is applied to all position of the first set to generate positions of the second set, the combined image can be updated with the same number of images used for originally generating the combined image 23.

Likewise, in a second update run of the combined thermal image 23, a third further set of positions is used. A third thermal image 41 is captured at a third position different from the second position of the second set by the same offset as the second position of the second set differs from the first position of the first set. Thus, each set of positions can be used to update temperature values and adds additional distance information to the combined image 23 such that the originally sparse distance information of the combined image 23 can be filled up. A dense map of distances can be extremely useful if a hotspot having temperature values exceeding a temperature value threshold is detected, as distances to the hotspot can be immediately supplied to firefighting equipment. Further, the information can be used to guide firefighting equipment if smoke has formed and an accurate distance measurement is no more possible.

Finally, the thermal imaging system 1 is also adapted to determine if smoke has formed, i.e., to detect an indication of smoke. To this end, the system 1 is adapted to measure a distance to the same spot 17 multiple times. As the distance meter 5 operates in the visible or near infrared range, its accuracy is considerably reduced if smoke forms as the laser beam is scattered or simply absorbed. If dense smoke clouds are formed, the distance meter 5 may also determine a considerably reduced distance. In both cases, the system 1 determines an indication of smoke emission which can, for example, by forwarded using the data transmission means to an operator. If an indication of smoke is available to the system 1, it may also refrain from updating distances in a combined thermal image 23 with newly measured distances to make sure that no incorrect distances are provided to firefighting equipment. In the exemplary thermal imaging system 1 described with respect to the Figures, an indication of smoke is only detected if in parallel pixels 13 are detected having assigned temperature values exceeding the temperature value threshold to avoid that a smoke alarm is raised if, for example, the distribution of goods under surveillance has changed.

## Claims

1. A thermal imaging system (1) comprising a housing (7), a thermal imaging sensor (3) and a mounting means (9),
wherein the thermal imaging sensor (3) is arranged in the housing (7) and adapted to capture a two-dimensional thermal image (11, 25 - 33, 37 - 43) in the infrared spectral range, wherein the captured two-dimensional thermal image (11, 25 - 33, 37 - 43) comprises a plurality of pixels (13), wherein each pixel (13) represents a surface section located in a field of view (15) of the thermal imaging sensor (3), wherein for each surface section represented by a pixel (13) surface temperature information is assigned to the respective pixel (13) as temperature value by the thermal imaging sensor (3),
wherein the mounting means (9) is adapted for mounting the housing (7) to a support structure and for controllably moving the housing (7) with respect to a support structure to which the housing (7) is mounted in two rotational degrees of freedom to different positions,
wherein the thermal imaging system (1) further comprises a distance meter (5) arranged in or attached to the housing (7) and adapted for determining the distance to at least one spot (17, 45 - 51) on a surface located in the field of view (15) of the thermal imaging sensor (3), wherein the size of the spot (17, 45 - 51) on the surface is defined by the field of view (19) of the distance meter (5) and the field of view (19) is narrower than the field of view (15) of the thermal imaging sensor (3), and
wherein the system (1) is adapted to assign the distance determined by the distance meter (5) for the at least one spot (17, 45 - 51) to one or a plurality of pixels (13) of the thermal image (11, 25 - 33, 37 - 43) captured by the thermal imaging sensor (3), which pixel (13) or plurality of pixels (13) represent a surface section or a plurality of surface sections overlapping with the at least one spot (17, 45 - 51),
**characterized in that**
the system (1) is adapted to create a combined thermal image (23) by
controlling the mounting means (9) to move the housing (7) to each position of a first set of positions,
controlling the thermal imaging sensor (3) to capture a thermal image (25 - 33) and controlling the distance meter (5) to determine a distance to at least one spot (17) at each position of the first set of positions, wherein the fields of view of individual ones of the thermal images (25 - 33) captured at each position of the first set of positions overlap at least in some pixels with adjacent ones of the thermal images (25 - 33) captured at each position of the first set of positions,
combining the plurality of captured thermal images (25 - 33) to a combined thermal image (23) covering a field of view exceeding the field of view of a single thermal image (11, 25 -33, 37 - 43) captured with the thermal imaging sensor (3) and
assigning distances determined by the distance meter (5) for the at least one spot (17) at each position of the first set of positions to one or a plurality of pixels (13) of the combined thermal image (23), which pixel (13) or plurality of pixels (13) represent a surface section or a plurality of surface sections overlapping with the at least one spot (17),
and **in that** the system (1) is adapted to update a previously created or updated combined thermal image (23) by
controlling the mounting means (9) to move the housing (7) to each position of a further set of positions, wherein the positions of the further set differ from the positions of the first or a previous further set of positions used for creating or previously updating the combined thermal image,
controlling the thermal imaging sensor (3) to capture a thermal image (37 - 43) and controlling the distance meter (5) to determine a distance to at least one spot (45,47, 49, 51) at each position of the further set of positions, wherein the fields of view of individual ones of the thermal images (25 - 33) captured at each position of the further set of positions overlap at least in some pixels with adjacent ones of the thermal images (25 - 33) captured at each position of the further set of positions,
replacing existing temperature values of pixels (13) of the combined thermal image (23) with temperature values of pixels (13) of thermal images (37 - 43) captured for positions of the further set of positions but maintaining a distance assigned to a pixel (13) and
assigning distances determined by the distance meter (5) for the at least one spot (45 - 51) at each position of the further set of positions to one or a plurality of pixels (13) of the combined thermal image (23), which pixel (13) or plurality of pixels (13) represent a surface section or a plurality of surface sections overlapping with the at least one spot (45 - 51) and wherein previously assigned distances are maintained and only replaced by distances determined for positions of the further set of positions if the distance to the same surface segment or segments is measured again, such that the sparse distance information of the combined thermal image generated by combining the thermal images (25 - 33) captured at each position of the first set of positions becomes denser with every update run using one of the further sets of positions.

2. The system (1) according to claim 1, wherein the system (1) is adapted to control the mounting means (9) to move the housing to a predetermined position and
wherein the system (1) is adapted to control the thermal imaging sensor (3) to capture a thermal image (11, 25 - 33, 37 - 43) and to control the distance meter (5) to determine a distance to the at least one spot (17, 45 - 51) after it has been moved to the predetermined position.

3. The system (1) according to claim 1 or 2, wherein the system (1) is adapted to identify a pixel (13) or a plurality of pixels (13) in a captured thermal image (11, 25 - 33, 37 - 43) having assigned temperature values exceeding a threshold temperature value and
wherein the system (1) is adapted to determine a position to which the housing (7) can be moved with respect to a support structure to which the housing (7) has been mounted by the mounting means (9) such that a distance to a spot (17, 45 - 51) overlapping with the surface section represented by the pixel (13) or the surface section represented by the plurality of pixels (13) having assigned temperature value exceeding the temperature value threshold can be determined by the distance meter (5).

4. The system (1) according to any of the preceding claims, wherein the distance meter (5) is adapted to determine a distance to a plurality of spots on a surface in the field of view (15) of the thermal imaging sensor (3) without moving the housing (7) with respect to a support structure to which the housing (7) has been mounted and
wherein the system (1) is adapted to assign each of the plurality of distances determined by the distance meter (5) to one or a plurality of pixels (13) of a thermal image (11) captured by the thermal imaging sensor (3), which pixel (13) or plurality of pixels (13) represent a surface section or a plurality of surface sections overlapping with the respective spot (17) of the plurality of spots.

5. The system (1) according to any of the preceding claims, wherein the distance meter (5) operates in the visible or near infrared spectral range and
wherein the system (1) is adapted to detect an indication of smoke emission by repeatedly determining a distance to a spot (17) with the housing (7) in the same position and by determining if a distance to the spot (17) or a quality of the determined distance is reduced between repeated distance determinations, wherein determining a reduction of distance or a reduction of the quality of the determined distance is an indication of smoke emission.

6. A method for creating a thermal image (11, 23, 25 -29, 37 - 43) by capturing a two-dimensional thermal image (11, 25 - 29, 37 - 43) in the infrared spectral range using a thermal imaging sensor (3), wherein the captured two dimensional thermal image (11, 25 - 29, 37 - 43) comprises a plurality of pixels (13), wherein each pixel (13) represents a surface section located in a field of view (15) of the thermal imaging sensor (3), wherein for each surface section represented by a pixel (13) surface temperature information is assigned to the respective pixel (13) as temperature value by the thermal imaging sensor (3),
determining the distance to at least one spot (17) on a surface located in a field of view (15) of the thermal imaging sensor (3) using a distance meter (5) and
assigning the distance determined by the distance meter (5) for the at least one spot (17) to one or a plurality of pixels (13) of the thermal image (11, 25 - 29, 37 -43) captured by the thermal imaging sensor (3), which pixel (13) or plurality of pixels (13) represent a surface section or a plurality of surface sections overlapping with the at least one spot (17, 45 - 51),
**characterized by**
moving the housing (7) to each position of a first set of positions,
capturing a thermal image (25 - 33) and determining a distance to at least one spot (17) at each position of the first set of positions, wherein the fields of view of individual ones of the thermal images (25 - 33) captured at each position of the first set of positions overlap at least in some pixels with adjacent ones of the thermal images (25 - 33) captured at each position of the first set of positions,
combining the plurality of captured thermal images (25 - 33) to a combined thermal image (23) covering a field of view exceeding the field of view (15) of a single thermal image (11, 25 - 33) captured with the thermal imaging sensor (3) and
assigning distances determined for the at least one spot (17) at each position of the first set of positions to one or a plurality of pixels (13) of the combined thermal image (23), which pixel (13) or plurality of pixels (13) represent a surface section or a plurality of surface sections overlapping with the at least one spot (17), and
moving the housing (7) to each position of a further set of positions, wherein the positions of the further set differ from the positions of the first or a previous further set of positions,
capturing a thermal image (37 - 43) and determining a distance to at least one spot (45 - 51) at each position of the further set of positions, wherein the fields of view of individual ones of the thermal images (25 - 33) captured at each position of the further set of positions overlap at least in some pixels with adjacent ones of the thermal images (25 - 33) captured at each position of the further set of positions,
replacing existing temperature values of pixels (13) of the combined thermal image (23) with temperature values of pixels (17) of thermal images (37-43) captured for positions of the further set of positions but maintaining a distance assigned to a pixel (13) and
assigning distances determined for the at least one spot (45 - 51) at each position of the first set of positions to one or a plurality of pixels (13) of the combined thermal image (23), which pixel (13) or plurality of pixels (13) represent a surface section or a plurality of surface sections overlapping with at least one spot (45 - 47) and wherein previously assigned distances are maintained and only replaced by distances determined for positions of the further set of positions if the distance to the same surface segment or segments is measured again, such that the sparse distance information of the combined thermal image generated by combining the thermal images (25 - 33) captured at each position of the first set of positions becomes denser with every update run using one of the further sets of positions.

7. The method according to claim 6, wherein a housing (7) comprising the thermal imaging sensor (3) and the distance meter (5) is moved to a predetermined position by a rotational movement about at least one of two rotational degrees of freedom before the thermal image (11, 25 - 29, 37- 43) is captured and the distance to the at least one spot (17, 45 - 51) is determined.

8. The method according to claim 6 or 7, comprising the steps of identifying a pixel (13) or a plurality of pixels (13) in a captured thermal image (11, 25 - 29, 37 - 43) having assigned temperature values exceeding a temperature value threshold and
determining a position to which the housing (7) can be moved such that a distance to a spot (17, 45 - 51) overlapping with the surface section represented by the pixel (13) or the surface sections represented by the plurality of pixels (13) having assigned temperature values exceeding the temperature value threshold can be determined by the distance meter (5).

9. The method according to any of claims 6, 7 or 8, further comprising the steps of determining a distance to a plurality of spots on a surface in the field of view (15) of the thermal imaging sensor (3) without moving the housing (7) and
assigning each of the plurality of the determined distances to one or a plurality of pixels (13) of a thermal image (11, 25 - 29, 37 - 43) captured by the thermal imaging sensor (3), which pixel (13) or plurality of pixels (13) represent a surface section or a plurality of surface sections overlapping with the respective spot of the plurality of spots.

10. The method according to any of claim 6 to 9, wherein the distance meter (5) operates in the visible or near infrared spectral range and
further comprising the step of detecting an indication of smoke emission by repeatedly determining a distance to a spot (17) with the housing (7) in the same position and by determining if a distance to the spot (17) is reduced or if a quality of a determined distance is reduced between repeated distance determinations, wherein determining a reduction of distance or a reduction of the quality of the determined distance is an indication of smoke emission.

## Patentansprüche

1. Wärmebildsystem (1) umfassend ein Gehäuse (7), einen Wärmebildsensor (3) und ein Befestigungsmittel (9),
wobei der Wärmebildsensor (3) in dem Gehäuse (7) angeordnet und angepasst ist, um ein zweidimensionales Wärmebild (11, 25 - 33, 37 - 43) im Infrarot-Spektralbereich aufzunehmen, wobei das aufgenommene zweidimensionale Wärmebild (11, 25 - 33, 37 - 43) mehrere Pixel (13) umfasst, wobei jedes Pixel (13) einen Oberflächenabschnitt darstellt, der sich in einem Sichtfeld (15) des Wärmebildsensors (3) befindet, wobei für jeden durch ein Pixel (13) dargestellten Oberflächenabschnitt eine Oberflächentemperaturinformation dem jeweiligen Pixel (13) als Temperaturwert durch den Wärmebildsensor (3) zugeordnet wird,
wobei das Befestigungsmittel (9) zum Befestigen des Gehäuses (7) an einer Tragstruktur und zum steuerbaren Bewegen des Gehäuses (7) relativ zu einer Tragstruktur, an der das Gehäuse (7) befestigt ist, in zwei Rotationsfreiheitsgraden in verschiedenen Positionen angepasst ist,
wobei das Wärmebildsystem (1) ferner einen Entfernungsmesser (5) umfasst, der in dem Gehäuse (7) angeordnet oder an diesem angebracht ist und angepasst ist, um den Abstand zu mindestens einem Punkt (17, 45 - 51) auf einer Oberfläche zu bestimmen, die sich im Sichtfeld (15) des Wärmebildsensors (3) befindet, wobei die Größe des Punktes (17, 45 - 51) auf der Oberfläche durch das Sichtfeld (19) des Entfernungsmessers (5) definiert ist und das Sichtfeld (19) enger ist als das Sichtfeld (15) des Wärmebildsensors (3), und
wobei das System (1) ausgelegt ist, um die durch den Entfernungsmesser (5) bestimmte Entfernung für den mindestens einen Punkt (17, 45 - 51) zu dem einen oder den mehreren Pixeln (13) des durch den Wärmebildsensor (3) aufgenommenen Wärmebildes (11, 25 - 33, 37 - 43) zuzuordnen, wobei das Pixel (13) oder die mehreren Pixel (13) einen Oberflächenabschnitt oder mehrere Oberflächenabschnitte darstellen, die den mindestens einen Punkt (17, 45 - 51) überlappen,
**dadurch gekennzeichnet, dass**
das System (1) angepasst ist, um ein kombiniertes Wärmebild (23) zu erzeugen, durch
Steuern des Befestigungsmittels (9), um das Gehäuse (7) in jede Position eines ersten Satzes von Positionen zu bewegen,
Steuern des Wärmebildsensors (3), um ein Wärmebild (25 - 33) aufzunehmen, und Steuern des Entfernungsmessers (5), um eine Entfernung zu mindestens einem Punkt (17) an jeder Position des ersten Satzes von Positionen zu bestimmen, wobei die Sichtfelder einzelner Wärmebilder (25 - 33), die an jeder Position des ersten Satzes von Positionen aufgenommenen wurden, mindestens in einigen Pixeln mit benachbarten Wärmebildern (25 - 33) überlappen, die an jeder Position des ersten Satzes von Positionen aufgenommenen wurden,
Kombinieren der mehreren aufgenommenen Wärmebilder (25 - 33) zu einem kombinierten Wärmebild (23), das ein Sichtfeld abdeckt, das über das Sichtfeld eines einzelnen Wärmebildes (11, 25 - 33, 37 - 43) hinausgeht, das mit dem Wärmebildsensor (3) aufgenommen wurde, und
Zuordnen von Entfernungen, die durch den Entfernungsmesser (5) für den mindestens einen Punkt (17) an jeder Position des ersten Satzes von Positionen bestimmt wurden, zu einem oder mehreren Pixeln (13) des kombinierten Wärmebildes (23), wobei das Pixel (13) oder die mehreren Pixel (13) einen Oberflächenabschnitt oder mehrere Oberflächenabschnitte darstellen, die mit dem mindestens einen Punkt (17) überlappen,
und dadurch, dass das System (1) angepasst ist, um ein zuvor erzeugtes oder aktualisiertes kombiniertes Wärmebild (23) zu aktualisieren, durch
Steuern des Befestigungsmittels (9), um das Gehäuse (7) in jede Position eines weiteren Satzes von Positionen zu bewegen, wobei sich die Positionen des weiteren Satzes von dem ersten oder von einem vorherigen weiteren Satz von Positionen unterscheiden, die zur Erzeugung oder der vorherigen Aktualisierung des kombinierten Wärmebildes verwendet wurden,
Steuern des Wärmebildsensors (3), um ein Wärmebild (37 - 43) aufzunehmen, und Steuern des Entfernungsmessers (5), um eine Entfernung zu mindestens einem Punkt (45, 47, 49, 51) an jeder Position des weiteren Satzes von Positionen zu bestimmen, wobei die Sichtfelder einzelner Wärmebilder (25 - 33), die an jeder Position des weiteren Satzes von Positionen aufgenommenen wurden, mindestens in einigen Pixeln mit benachbarten Wärmebildern (25 - 33) überlappen, die an jeder Position des weiteren Satzes von Positionen aufgenommenen wurden,
Ersetzen bestehender Temperaturwerte von Pixeln (13) des kombinierten Wärmebildes (23) durch Temperaturwerte von Pixeln (13) von Wärmebildern (37 - 43), die für Positionen des weiteren Satzes von Positionen aufgenommen wurden, aber Beibehaltung einer Entfernung, die einem Pixel (13) zugeordnet wurde, und
Zuordnen von Entfernungen, die durch den Entfernungsmesser (5) für den mindestens einen Punkt (45 - 51) an jeder Position des weiteren Satzes von Positionen bestimmt wurden, zu einem oder mehreren Pixeln (13) des kombinierten Wärmebildes (23), wobei das Pixel (13) oder die mehreren Pixel (13) einen Oberflächenabschnitt oder mehrere Oberflächenabschnitte darstellen, die den mindestens einen Punkt (45 - 51) überlappen, wobei zuvor zugewiesene Entfernungen beibehalten und nur durch Entfernungen ersetzt werden, die für Positionen des weiteren Satzes von Positionen bestimmt wurden, wenn die Entfernung zu demselben Oberflächensegment oder denselben Oberflächensegmenten erneut gemessen wird, so dass die spärliche Entfernungsinformation des kombinierten Wärmebildes, das durch Kombinieren der Wärmebilder (25 - 33) erzeugt wurde, die an jeder Position des ersten Satzes von Positionen aufgenommen wurden, mit jedem Aktualisierungsdurchgang unter Verwendung von einem der weiteren Sätze von Positionen dichter wird.

2. System (1) nach Anspruch 1, wobei das System (1) angepasst ist, um das Befestigungsmittel (9) zu steuern, um das Gehäuse in eine vorbestimmte Position zu bewegen, und
wobei das System (1) angepasst ist, um den Wärmebildsensor (3) zu steuern, um ein Wärmebild (11, 25 - 33, 37 - 43) aufzunehmen und um den Entfernungsmesser (5) zu steuern, um eine Entfernung zu dem mindestens einen Punkt (17, 45 - 51) zu bestimmen, nachdem er zu der vorbestimmten Position bewegt wurde.

3. System (1) nach Anspruch 1 oder 2, wobei das System (1) angepasst ist, um ein Pixel (13) oder mehrere Pixel (13) in einem aufgenommenen Wärmebild (11, 25 - 33, 37 - 43) zu identifizieren, die zugeordnete Temperaturwerte haben, die einen Temperaturschwellenwert überschreiten, und
wobei das System (1) angepasst ist, um eine Position zu bestimmen, in die das Gehäuse (7) in Bezug zu einer Tragstruktur, an der das Gehäuse (7) durch das Befestigungsmittel (9) angebracht wurde, bewegt werden kann, derart dass eine Entfernung zu einem Punkt (17, 45 - 51), der mit dem Oberflächenabschnitt, der durch das Pixel (13) dargestellt wird, oder mit dem Oberflächenabschnitt, der durch die mehreren Pixel (13) dargestellt wird, überlappt, die einen zugeordneten Temperaturwert aufweisen, der den Temperaturschwellenwert überschreitet, durch den Entfernungsmesser (5) bestimmt werden kann.

4. System (1) nach einem der vorhergehenden Ansprüche, wobei der Entfernungsmesser (5) ausgelegt ist, um eine Entfernung zu mehreren Punkten auf einer Oberfläche im Sichtfeld (15) des Wärmebildsensors (3) zu bestimmen, ohne das Gehäuse (7) in Bezug zu einer Tragstruktur zu bewegen, an der das Gehäuse (7) angebracht ist, und
wobei das System (1) ausgelegt ist, um jede der mehreren Entfernungen, die durch den Entfernungsmesser (5) bestimmt werden, einem oder mehreren Pixeln (13) eines Wärmebildes (11) zuzuordnen, das durch den Wärmbildsensor (3) aufgenommen wurde, wobei das Pixel (13) oder die mehreren Pixel (13) einen Oberflächenabschnitt oder mehrere Oberflächenabschnitte darstellen, die den jeweiligen Punkt (17) der mehreren Punkte überlappen.

5. System (1) nach einem der vorhergehenden Ansprüche, wobei der Entfernungsmesser (5) im sichtbaren oder nahen Infrarot-Spektralbereich arbeitet und
wobei das System (1) angepasst ist, um einen Hinweis auf eine Rauchemission zu erkennen, indem wiederholt eine Entfernung zu einem Punkt (17) mit dem Gehäuse (7) an der gleichen Position bestimmt wird und indem bestimmt wird, ob eine Entfernung zu dem Punkt (17) vorhanden ist oder eine Qualität der ermittelten Entfernung zwischen wiederholten Entfernungsbestimmungen verringert wird, wobei Bestimmen einer Entfernungsverringerung oder einer Verringerung der Qualität der bestimmten Entfernung ein Hinweis auf eine Rauchemission ist.

6. Verfahren zum Erzeugen eines Wärmebildes (11, 23, 25 - 29, 37 - 43) durch Aufnehmen eines zweidimensionalen Wärmebildes (11, 25 - 29, 37 - 43) im Infrarot-Spektralbereich mit einem Wärmebildsensor (3), wobei das aufgenommene zweidimensionale Wärmebild (11, 25 - 29, 37 - 43) mehrere Pixel (13) umfasst, wobei jedes Pixel (13) einen Oberflächenabschnitt darstellt, der sich in einem Sichtfeld (15) des Wärmebildsensors (3) befindet, wobei für jeden durch ein Pixel (13) dargestellten Oberflächenabschnitt eine Oberflächentemperaturinformation dem jeweiligen Pixel (13) als Temperaturwert durch den Wärmebildsensor (3) zugeordnet wird,
Bestimmen der Entfernung zu mindestens einem Punkt (17) auf einer Oberfläche, die sich in einem Sichtfeld (15) des Wärmebildsensors (3) befindet, mit Hilfe eines Entfernungsmessers (5) und
Zuordnen der durch den Entfernungsmesser (5) für den mindestens einen Punkt (17) bestimmten Entfernung zu einem oder mehreren Pixeln (13) des vom Wärmebildsensor (3) aufgenommenen Wärmebildes (11, 25 - 29, 37 - 43), wobei das Pixel (13) oder die mehreren Pixel (13) einen Oberflächenabschnitt oder mehrere Oberflächenabschnitte darstellen, die den mindestens einen Punkt (17, 45 - 51) überlappen,
**gekennzeichnet durch**
Bewegen des Gehäuses (7) in jede Position eines ersten Satzes von Positionen,
Aufnehmen eines Wärmebildes (25 - 33) und Bestimmen einer Entfernung zu mindestens einem Punkt (17) an jeder Position des ersten Satzes von Positionen, wobei die Sichtfelder der einzelnen Wärmebilder (25 - 33), die an jeder Position des ersten Satzes von Positionen aufgenommen wurden, zumindest in einigen Pixeln mit benachbarten der Wärmebilder (25 - 33) überlappen, die an jeder Position des ersten Satzes von Positionen aufgenommen wurden,
Kombinieren der mehreren aufgenommenen Wärmebilder (25 - 33) zu einem kombinierten Wärmebild (23), das ein Sichtfeld abdeckt, das über das Sichtfeld (15) eines einzelnen Wärmebildes (11, 25 - 33) hinausgeht, das mit dem Wärmebildsensor (3) aufgenommen wurde, und
Zuordnen von Entfernungen, die für den mindestens einen Punkt (17) an jeder Position des ersten Satzes von Positionen bestimmt wurden, zu einem oder mehreren Pixeln (13) des kombinierten Wärmebildes (23), wobei das Pixel (13) oder die mehreren Pixel (13) einen Oberflächenabschnitt oder mehrere Oberflächenabschnitte darstellen, die den mindestens einen Punkt (17) überlappen, und
Bewegen des Gehäuses (7) in jede Position eines weiteren Satzes von Positionen, wobei sich die Positionen des weiteren Satzes von den Positionen des ersten oder eines vorhergehenden weiteren Satzes von Positionen unterscheiden,
Aufnehmen eines Wärmebildes (37 - 43) und Bestimmen einer Entfernung zu mindestens einem Punkt (45 - 51) an jeder Position des weiteren Satzes von Positionen, wobei die Sichtfelder der einzelnen Wärmebilder (25 - 33), die an jeder Position des weiteren Satzes von Positionen aufgenommenen wurden, zumindest in einigen Pixel mit benachbarten Wärmebildern (25 - 33) überlappen, die an jeder Position des weiteren Satzes von Positionen aufgenommenen wurden,
Ersetzen bestehender Pixeltemperaturwerte (13) des kombinierten Wärmebildes (23) mit Temperaturwerten von Pixeln (13) von Wärmebildern (37 - 43), die für Positionen des weiteren Satzes von Positionen aufgenommen wurden, aber Beibehaltung einer Entfernung, die einem Pixel (13) zugeordnet wurde, und
Zuordnen von Entfernungen, die für den mindestens einen Punkt (45 - 51) an jeder Position des ersten Satzes von Positionen bestimmt wurden, zu einem oder mehreren Pixeln (13) des kombinierten Wärmebildes (23), wobei das Pixel (13) oder die mehreren Pixel (13) einen Oberflächenabschnitt oder mehrere Oberflächenabschnitte darstellen, die den mindestens einen Punkt (45 - 47) überlappen, und wobei zuvor zugeordnete Entfernungen derart beibehalten und nur durch Entfernungen ersetzt werden, die für Positionen des weiteren Satzes von Positionen bestimmt werden, wenn die Entfernung zu demselben Oberflächensegment oder denselben Oberflächensegmenten erneut gemessen wird, so dass die spärliche Entfernungsinformation des kombinierten Wärmebildes, das durch Kombinieren der Wärmebilder (25 - 33) erzeugt wurde, die an jeder Position des ersten Satzes von Positionen aufgenommen wurden, mit jedem Aktualisierungsdurchgang unter Verwendung von einem der weiteren Sätze von Positionen dichter wird.

7. Verfahren nach Anspruch 6, wobei ein Gehäuse (7), das den Wärmebildsensor (3) und den Entfernungsmesser (5) umfasst, durch eine Drehbewegung um mindestens einen von zwei Rotationsfreiheitsgraden in eine vorbestimmte Position bewegt wird, bevor das Wärmebild (11, 25 - 29, 37- 43) aufgenommen und die Entfernung zu dem mindestens einen Punkt (17, 45 - 51) bestimmt wird.

8. Verfahren nach Anspruch 6 oder 7, umfassend die Schritte des Identifizierens eines Pixels (13) oder von mehreren Pixeln (13) in einem aufgenommenen Wärmebild (11, 25 - 29, 37 - 43), die zugeordnete Temperaturwerte aufweisen, die einen Temperaturschwellenwert überschreiten, und
Bestimmen einer Position, in die das Gehäuse (7) derart bewegt werden kann, dass eine Entfernung zu einem Punkt (17, 45 - 51), der mit dem Oberflächenabschnitt, der durch das Pixel (13) dargestellt wird, oder mit dem Oberflächenabschnitt, der durch die mehreren Pixel (13) dargestellt wird, überlappt, die einen zugeordneten Temperaturwert aufweisen, der den Temperaturschwellenwert überschreitet, durch den Entfernungsmesser (5) bestimmt werden kann.

9. Verfahren nach Anspruch 6, 7 oder 8, ferner umfassend die Schritte des Bestimmens einer Entfernung zu mehreren Punkten auf einer Oberfläche im Sichtfeld (15) des Wärmebildsensors (3) ohne das Gehäuses (7) zu bewegen, und
Zuordnen von jeder der mehreren bestimmten Entfernungen einem oder mehreren Pixeln (13) eines Wärmebildes (11, 25 - 29, 37 - 43), das vom Wärmebildsensor (3) aufgenommen wurde, wobei das Pixel (13) oder die mehreren Pixel (13) einen Oberflächenabschnitt oder mehrere Oberflächenabschnitte darstellen, die den jeweiligen Punkt oder die mehreren Punkte überlappen.

10. Verfahren nach Anspruch 6 bis 9, wobei der Entfernungsmesser (5) im sichtbaren oder nahen Infrarot-Spektralbereich arbeitet und
ferner den Schritt des Erkennens eines Hinweises einer Rauchemission umfasst, indem wiederholt eine Entfernung zu einem Punkt (17) mit dem Gehäuse (7) an der gleichen Position bestimmt wird und indem bestimmt wird, ob eine Entfernung zu dem Punkt (17) vorhanden ist oder eine Qualität der ermittelten Entfernung zwischen wiederholten Entfernungsbestimmungen verringert wird, wobei Bestimmen einer Entfernungsverringerung oder einer Verringerung der Qualität der bestimmten Entfernung ein Hinweis auf eine Rauchemission ist.

## Revendications

1. Système d'imagerie thermique (1) comprenant un boîtier (7), un capteur d'imagerie thermique (3) et un moyen de montage (9),
dans lequel le capteur d'imagerie thermique (3) est disposé dans le boîtier (7) et est adapté pour capturer une image thermique bidimensionnelle (11,25-33,37-43) dans le domaine spectral infrarouge, dans lequel l'image thermique bidimensionnelle (11,25-33,37-43) capturée comprend une pluralité de pixels (13), dans lequel chaque pixel (13) représente une section de surface située dans un champ de vision (15) du capteur d'imagerie thermique (3), dans lequel, pour chaque section de surface représentée par un pixel (13), de l'information de température de surface est affectée au pixel respectif (13) en tant que valeur de température par le capteur d'imagerie thermique (3),
dans lequel le moyen de montage (9) est adapté pour monter le boîtier (7) sur une structure de support et pour déplacer de façon contrôlée le boîtier (7) par rapport à une structure de support sur laquelle le boîtier (7) est monté dans deux degrés de liberté en rotation par rapport à différentes positions,
dans lequel le système d'imagerie thermique (1) comprend en outre un télémètre (5) disposé dans, ou fixé sur le boîtier (7) et adapté pour déterminer la distance par rapport à au moins un endroit (17, 45-51) sur une surface située dans le champ de vision (15) du capteur d'imagerie thermique (3), dans lequel la taille de l'endroit (17, 45-51) sur la surface est définie par le champ de vision (19) du télémètre (5), et le champ de vision (19) est plus étroit que le champ de vision (15) du capteur d'imagerie thermique (3), et
dans lequel le système (1) est adapté pour affecter la distance déterminée par le télémètre (5) pour l'au moins un endroit (17,45-51) à un ou une pluralité de pixel(s) (13) de l'image thermique (11,25-33,37-43) capturée par le capteur d'imagerie thermique (3), lequel pixel (13) ou laquelle pluralité de pixels (13) représente(nt) une section de surface ou une pluralité de sections de surface en chevauchement avec l'au moins un endroit (17, 45-51),
**caractérisé en ce que**
le système (1) est adapté pour créer une image thermique combinée (23) grâce
au contrôle du moyen de montage (9) pour déplacer le boîtier (7) vers chaque position d'un premier ensemble de positions,
au contrôle du capteur d'imagerie thermique (3) pour capturer une image thermique (25-33) et contrôler le télémètre (5) pour déterminer une distance par rapport à au moins un endroit (17) à chaque position du premier ensemble de positions, dans lequel les champs de vision d'images individuelles des images thermiques (25-33) capturées à chaque position du premier ensemble de positions sont en chevauchement au moins dans certains pixels avec des images adjacentes des images thermiques (25-33) capturées à chaque position du premier ensemble de positions,
à la combinaison de la pluralité des images thermiques capturées (25-33) en une image thermique combinée (23) recouvrant un champ de vision dépassant le champ de vision d'une seule image thermique (11,25-33,37-43) capturée avec le capteur d'imagerie thermique (3), et
à l'affectation de distances, déterminées par le télémètre (5) pour l'au moins un endroit (17) à chaque position du premier ensemble de positions, à un ou une pluralité de pixel(s) (13) de l'image thermique combinée (23), lequel pixel (13) ou laquelle pluralité de pixels (13) représente(nt) une section de surface ou une pluralité de sections de surface en chevauchement avec l'au moins un endroit (17),
et **en ce que** le système (1) est adapté pour mettre à jour une image thermique combinée (23) précédemment créée ou mise à jour grâce
au contrôle du moyen de montage (9) pour déplacer le boîtier (7) vers chaque position d'un autre ensemble de positions, dans lequel les positions de l'autre ensemble diffèrent des positions du premier ou d'un précédent autre ensemble de positions utilisées pour créer ou préalablement mettre à jour l'image thermique combinée,
au contrôle du capteur d'imagerie thermique (3) pour capturer une image thermique (37-43) et contrôler le télémètre (5) pour déterminer une distance par rapport à au moins un endroit (45,47,49,51) à chaque position de l'autre ensemble de positions, dans lequel les champs de vision d'images individuelles des images thermiques (25-33) capturées à chaque position de l'autre ensemble de positions sont en chevauchement au moins dans certains pixels avec des images adjacentes des images thermiques (25-33) capturées à chaque position de l'autre ensemble de positions,
au remplacement de valeurs de température existantes de pixels (13) de l'image thermique combinée (23) par des valeurs de température de pixels (13) d'images thermiques (37-43) capturées pour des positions de l'autre ensemble de positions mais en maintenant une distance affectée à un pixel (13), et
à l'affectation de distances déterminées par le télémètre (5) pour l'au moins un endroit (45-51) à chaque position de l'autre ensemble de positions à un ou une pluralité de pixel(s) (13) de l'image thermique combinée (23), lequel pixel (13) ou laquelle pluralité de pixels (13) représente(nt) une section de surface ou une pluralité de sections de surface en chevauchement avec l'au moins un endroit (45-51) et dans lequel des distances précédemment affectées sont maintenues et seulement remplacées par des distances déterminées pour des positions de l'autre ensemble de positions si la distance par rapport au même segment ou segments de surface est de nouveau mesurée, de sorte que l'information de distance éparse de l'image thermique combinée générée en combinant les images thermiques (25-33) capturées à chaque position du premier ensemble de positions devient plus étoffée avec chaque exécution de mise à jour en utilisant l'un des autres ensembles de positions.

2. Système (1) selon la revendication 1, dans lequel le système (1) est adapté pour contrôler le moyen de montage (9) pour déplacer le boîtier vers une position prédéterminée et
dans lequel le système (1) est adapté pour contrôler le capteur d'imagerie thermique (3) pour capturer une image thermique (11, 25-33, 37-43) et pour contrôler le télémètre (5) pour déterminer une distance par rapport à l'au moins un endroit (17, 45-51) après son déplacement vers la position prédéterminée.

3. Système (1) selon la revendication 1 ou 2, dans lequel le système (1) est adapté pour identifier un pixel (13) ou une pluralité de pixels (13) dans une image thermique capturée (11, 25-33, 37-43) ayant des valeurs de températures affectées dépassant une valeur de température de seuil, et
dans lequel le système (1) est adapté pour déterminer une position vers laquelle le boîtier (7) peut être déplacé par rapport à une structure de support sur laquelle le boîtier (7) a été monté par le moyen de montage (9) de sorte qu'une distance par rapport à un endroit (17, 45-51) en chevauchement avec la section de surface représentée par le pixel (13) ou la section de surface représentée par la pluralité de pixels (13) ayant une valeur de température affectée dépassant le seuil de valeur de température peut être déterminée par le télémètre (5).

4. Système (1) selon l'une quelconque des revendications précédentes, dans lequel le télémètre (5) est adapté pour déterminer une distance par rapport à une pluralité d'endroits sur une surface dans le champ de vision (15) du capteur d'imagerie thermique (3) sans déplacer le boîtier (7) par rapport à une structure de support sur laquelle le boîtier (7) a été monté, et
dans lequel le système (1) est adapté pour affecter chacune de la pluralité des distances déterminées par le télémètre (5) à un ou une pluralité de pixel(s) (13) d'une image thermique (11) capturée par le capteur d'imagerie thermique (3), lequel pixel ou laquelle pluralité de pixels (13) représente(nt) une section de surface ou une pluralité de sections de surface en chevauchement avec l'endroit (17) respectif de la pluralité des endroits.

5. Système (1) selon l'une quelconque des revendications précédentes, dans lequel le télémètre (5) fonctionne dans le domaine spectral visible ou infrarouge proche, et
dans lequel le système (1) est adapté pour détecter une indication d'émission de fumée en déterminant de façon répétée une distance par rapport à un endroit (17) avec le boîtier (7) dans la même position et en déterminant si une distance par rapport à l'endroit (17) ou une qualité de la distance déterminée est réduite entre des déterminations de distance répétées, dans lequel la détermination d'une réduction de distance ou d'une réduction de la qualité de la distance déterminée est une indication d'émission de fumée.

6. Procédé pour créer une image thermique (11, 23, 25-29, 37-43) en capturant une image thermique bidimensionnelle (11, 23, 25-29, 37-43) dans le domaine spectral infrarouge en utilisant un capteur d'imagerie thermique (3), dans lequel l'image thermique bidimensionnelle (11, 23, 25-29, 37-43) capturée comprend une pluralité de pixels (13), dans lequel chaque pixel (13) représente une section de surface située dans un champ de vision (15) du capteur d'imagerie thermique (3), dans lequel, pour chaque section de surface représentée par un pixel (13), une information de température de surface est affectée au pixel respectif (13) en tant que valeur de température par le capteur d'imagerie thermique (3),
en déterminant la distance par rapport à au moins un endroit (17) sur une surface située dans un champ de vision (15) du capteur d'imagerie thermique (3) en utilisant un télémètre (5), et
en affectant la distance déterminée par le télémètre (5) pour l'au moins un endroit (17) à un ou une pluralité de pixel (s) (13) de l'image thermique (11, 25-29, 37-43) capturée par le capteur d'imagerie thermique (3), lequel pixel (13) ou laquelle pluralité de pixels (13) représente(nt) une section de surface ou une pluralité de sections de surface en chevauchement avec l'au moins un endroit (17, 45-51),
**caractérisé par**
le déplacement du boîtier (7) vers chaque position d'un premier ensemble de positions,
la capture d'une image thermique (25-33) et la détermination d'une distance par rapport à au moins un endroit (17) à chaque position du premier ensemble de positions, dans lequel les champs de vision d'images individuelles des images thermiques (25-33) capturées à chaque position du premier ensemble de positions sont en chevauchement au moins dans certains pixels avec des images adjacentes des images thermiques (25-33) capturées à chaque position du premier ensemble de positions,
la combinaison de la pluralité des images thermiques capturées (25-33) en une image thermique combinée (23) recouvrant un champ de vision dépassant le champ de vision (15) d'une seule image thermique (11, 25-33) capturée avec le capteur d'imagerie thermique (3), et
l'affectation de distances déterminées pour l'au moins un endroit (17) à chaque position du premier ensemble de positions à un ou une pluralité de pixel(s) (13) de l'image thermique combinée (23), lequel pixel (13) ou laquelle pluralité de pixels (13) représente(nt) une section de surface ou une pluralité de sections de surface en chevauchement avec l'au moins un endroit (17), et
le déplacement du boîtier (7) vers chaque position d'un autre ensemble de positions, dans lequel les positions de l'autre ensemble diffèrent des positions du premier ou précédent autre ensemble de positions,
la capture d'une image thermique (37-43) et la détermination d'une distance par rapport à au moins un endroit (45-51) à chaque position de l'autre ensemble de positions, dans lequel les champs de vision d'images individuelles des images thermiques (25-33) capturées à chaque position de l'autre ensemble de positions sont en chevauchement au moins dans certains pixels avec des images adjacentes des images thermiques (25-33) capturées à chaque position de l'autre ensemble de positions,
le remplacement de valeurs de température existantes de pixels (13) de l'image thermique combinée (23) par des valeurs de température de pixels (13) d'images thermiques (37-43) capturées pour des positions de l'autre ensemble de positions mais en maintenant une distance affectée à un pixel (13), et
l'affectation de distances déterminées pour l'au moins un endroit (45-51) à chaque position du premier ensemble de positions à un ou une pluralité de pixel(s) (13) de l'image thermique combinée (23), lequel pixel (13) ou laquelle pluralité de pixels (13) représente(nt) une section de surface ou une pluralité de sections de surface en chevauchement avec au moins un endroit (45-57) et dans lequel des distances précédemment affectées sont maintenues et seulement remplacées par des distances déterminées pour des positions de l'autre ensemble de positions si la distance par rapport au même segment ou segments de surface est de nouveau mesurée, de sorte que l'information de distance éparse de l'image thermique combinée générée en combinant les images thermiques (25-33) capturées à chaque position du premier ensemble de positions devient plus étoffée avec chaque exécution de mise à jour en utilisant l'un des autres ensembles de positions.

7. Procédé selon la revendication 6, dans lequel un boîtier (7) comprenant le capteur d'imagerie thermique (3) et le télémètre (5) est déplacé vers une position prédéterminée par un mouvement de rotation autour d'au moins l'un de deux degrés de liberté en rotation avant que l'image thermique (11, 25-29, 37-43) soit capturée, et la distance par rapport à au moins un endroit (17, 45-51) est déterminée.

8. Procédé selon la revendication 6 ou 7, comprenant les étapes d'identification d'un pixel (13) ou d'une pluralité de pixels (13) dans une image thermique capturée (11, 25-29, 37-43) ayant des valeurs de température affectées dépassant un seuil de valeur de température, et
la détermination d'une position vers laquelle le boîtier (7) peut être déplacé de sorte qu'une distance par rapport à un endroit (17, 45-51) en chevauchement avec la section de surface représentée par le pixel (13) ou les sections de surface représentées par la pluralité des pixels (13) ayant des valeurs de température affectées dépassant le seuil de valeur de température peut être déterminée par le télémètre (5).

9. Procédé selon l'une quelconque des revendications 6, 7 ou 8, comprenant en outre les étapes de détermination d'une distance par rapport à une pluralité d'endroits sur une surface dans le champ de vision (15) du capteur d'imagerie thermique (3) sans déplacer le boîtier (7), et
d'affectation de chacune de la pluralité des distances déterminées à un ou une pluralité de pixel (s) (13) d'une image thermique (11, 25-29, 37-43) capturée par le capteur d'imagerie thermique (3), lequel pixel (13) ou laquelle pluralité de pixels (13) représente(nt) une section de surface ou une pluralité de sections de surface en chevauchement avec l'endroit respectif de la pluralité des endroits.

10. Procédé selon l'une quelconque des revendications 6 à 9, dans lequel le télémètre (5) fonctionne dans le domaine spectral visible ou infrarouge proche, et
comprenant en outre l'étape de détection d'une indication d'émission de fumée en déterminant de façon répétée une distance par rapport à un endroit (17) avec le boîtier (7) dans la même position et en déterminant si une distance par rapport à l'endroit (17) est réduite ou si une qualité d'une distance déterminée est réduite entre des déterminations de distance répétées, dans lequel la détermination d'une réduction de distance ou d'une réduction de la qualité de la distance déterminée est une indication d'émission de fumée.
